# EUROPEAN PATENT SPECIFICATION

(11) **EP 0 807 456 B1**
(45) Date of publication and mention of the grant of the patent: **12.12.2001**
(21) Application number: 96303226.3
(22) Date of filing: 08.05.1996
(51) Int. Cl.: B01D 53/14, B01D 53/62

(54) **Thermal process for removal of contaminants from process streams**
Thermisches Verfahren zur Entfernung von Verunreinigungen aus Prozessströmen
Procédé thermique pour l'élimination des contaminants de courants de procédé

(43) Date of publication of application: 19.11.1997
(73) Proprietor: UNION CARBIDE CHEMICALS & PLASTICS TECHNOLOGY CORPORATION, Danbury, Connecticut 06817-0001 (US)
(72) Inventor: McCain, James Herndon, Charleston, West Virginia 25314 (US); Naumann, Alfred Wayne, Charleston, West Virginia 25311 (US); Wang, Wei-Yeong, Charleston, West Virginia 25314 (US)
(74) Representative: Allard, Susan Joyce

(56) References cited:
- WO-A-91/19706
- DE-A- 3 117 084
- US-A- 4 282 193

## Description

### Background of the Invention

Commercial processes for manufacture of alkylene oxides, e.g., ethylene and propylene oxide, are well known. In a typical process, an alkylene is oxidized over a silver-containing catalyst to the corresponding oxide, which may be recovered or may be further reacted, e.g., with water to form the corresponding glycol. In such oxide manufacturing processes, carbon dioxide and various organic materials are often formed as unwanted by-products.

In a known process for removing the carbon dioxide, the carbon dioxide-bearing stream is scrubbed with an aqueous solution of alkali metal carbonates and/or bicarbonates. Such a process is described in, e.g., U.S. Pat. No. 3,907,969 and Great Britain Pat. No. 1,415, 036. The process of that patent involves the use of vanadium and other catalytic materials which would be expensive to continually replenish, as well being undesirable to release to the environment. Accordingly, it is advantageous to provide an improvement to that process whereby the depleted scrubbing stream is treated to remove various contaminants, and is returned to the process.

A method for significantly improving the catalytic oxidation of the alkylene to the corresponding oxide has recently been disclosed in U.S. Pat. No. 5,504,503, filed July 14, 1993. This process utilizes silver catalysts of the type comprising at least one efficiency-enhancing salt of a member of a redox-half-reaction pair which are employed in processes in which at least one efficiency-enhancing gaseous member of a redox-half-reaction pair is present (described hereinbelow). When the process of this patent combined with the carbon dioxide removal process described above, undesirable nitrate and/or nitrite, as well as various organic, contaminants may be formed.

It has now been found that organic contaminants, as well as inorganic contaminants such as those resulting from processes such as those of the above-cited patent can be successfully removed, or optionally controlled in concentration, without significant destruction or depletion of the expensive chemicals required for the carbon dioxide scrubbing procedure, by the method reported below.

### Summary of the Invention

The present invention provides a method for controlling in a process for the production of alkylene oxide the build-up of nitrogen-containing salts contained in an aqueous process stream recycling between a CO₂ absorption step and a CO₂ desorption step, comprising:
(a) directing at least some of said aqueous process stream through a heating means under conditions sufficient to decompose at least part of said nitrogen-containing salts,
(b) directing the effluent from the heating means to at least one removal means for removing at least part of the decomposition products of the nitrogen-containing salts,
(c) dissolving in water at least part of said effluent after said removal of decomposition products, and
(d) returning said nitrogen reduced effluent to said aqueous process stream.

In another embodiment, the present invention provides a process for the manufacture of alkylene oxide comprising the oxidation of an alkylene, said process further comprising an aqueous recycle stream contained dissolved alkali metal carbonate and/or bicarbonate salts from a CO₂ absorption step to a CO₂ desorption step and return, said stream further containing organic materials and nitrogen-containing salts as contaminants, comprising controlling the build-up of said contaminants in said recycle stream by:
(a) directing at least some of said recycle stream through a heating means under conditions sufficient to decompose at least part of the organic materials and at least part of the nitrogen-containing salts.
(b) removing gaseous products of the decomposition,
(c) dissolving remaining salts in water to form an aqueous solution, and
(d) returning said aqueous solution to the aqueous recycle stream containing alkali metal carbonate/bicarbonate salts.

In another preferred embodiment, the instant invention provides a process for the manufacture of alkylene oxide comprising the oxidation of an alkylene, said process further comprising firstly directing at least some of said recycle stream through a heating means under conditions sufficient to take the salts to substantial dryness.

### Brief Description of the Figures

Figure 1 is a flow diagram showing the general relationship of the present decontamination process to an alkylene oxide manufacturing process.

Figure 2 is a flow diagram showing the use of a T-Thermal oxidizer, a preferred device for carrying out the decomposition and dissolution in the present process.

### Description of the Invention

In its broadest embodiment, this invention contemplates the use of heat to decompose nitrogen containing salts and optionally, organics which are present as contaminants, e.g., unwanted by-products, borne by an aqueous stream which forms part of a manufacturing process for the production of alkylene oxides. Decomposition of the contaminants produces decomposition products, e.g., gases, which can be flashed off or stripped off by means well known in the art, thereby resulting in a purified or decontaminated stream which can be returned to the manufacturing process.

While it is expected that most contaminants will be dissolved in the aqueous stream, the invention is not intended to be limited to dissolved materials. For instance, organic contaminants could be borne is suspension or microemulsion form, and inorganic materials could be in insoluble, particulate form. By removal of at least some, and preferably all, of the contaminants by the thermal treatment of this invention, a purified aqueous stream can be returned to the manufacturing process, thereby controlling the build-up of the contaminants in the manufacturing process. It will be readily understood and appreciated that the present method is most conveniently applied to a manufacturing process through use of a recycle loop, i.e., the contaminated stream is channeled through the treatment method of this invention, and the decontaminated effluent of the present invention is returned to the manufacturing process. It will likewise be appreciated that the input to, and the output from, the present treatment method can be situated at any convenient point of the manufacturing process.

Processes where the method of this invention is applicable are the preparation of alkylene oxides, which can be recovered, or further processed to derivatives, such as glycols, alkanolamines, polyalkylene oxides and other polymers.

More specifically, one of the preferred embodiments of the invention relates to known processes for the catalytic conversion of ethylene to ethylene oxide, with subsequent hydrolysis of the ethylene oxide to ethylene glycol. Such a process is well known and is described in general terms in various publications (e.g., *Kirk-Othmer Encyclopedia of Chemical Technology, 4th Ed.,* vol. 9, pages 915-960 (John Wiley & Sons, New York, 1994)), and in numerous U.S. and non-U.S. patents. Many variations on such a process, principally concerned with the catalysis aspects, are also disclosed in the art. See, for example, U.S. Patent No. 5,187,140 and U.S. Patent No. 5,504,053, filed July 14, 1993.

One particularly effective process for the preparation of ethylene oxide utilizes silver catalysts of the type comprising at least one efficiency-enhancing salt of a member of a redox-half-reaction pair which are employed in processes in which at least one efficiency-enhancing gaseous member of a redox-half-reaction pair is present (described hereinbelow). The term "redox-half-reaction" is defined herein to mean half-reactions like those found in equations presented in tables of standard reduction or oxidation potentials, also known as standard or single electrode potentials, of the type found in, for instance, "Handbook of Chemistry", N. A. Lange, Editor, McGraw-Hill Book Company, Inc., pages 1213-1218 (1961) or "CRC Handbook of Chemistry and Physics", 65th Edition, CRC Press, Inc., Boca Raton, Florida, pages D155-162 (1984). The term "redox-half-reaction pair" refers to the pairs of atoms, molecules or ions or mixtures thereof which undergo oxidation or reduction in such half-reaction equations. Such terms as redox-half-reaction pairs are used herein to include those members of the class of substances which provide the desired performance enhancement, rather than a mechanism of the chemistry occurring. Preferably, such compounds, when associated with the catalyst as salts of members of a half-reaction pair, are salts in which the anions are oxyanions, preferably an oxyanion of a polyvalent atom; that is, the atom of the anion to which oxygen is bonded is capable of existing, when bonded to a dissimilar atom, in different valence states. Potassium is a preferred cation, although sodium, rubidium and cesium may also be operable, and among the preferred anions are nitrate, nitrite and other anions capable of undergoing displacement or other chemical reaction and forming nitrate anions under epoxidation conditions. Preferred salts include KNO₃ and KNO₂, with KNO₃ being most preferred.

The reaction conditions for carrying out the oxidation reaction are well known and extensively described in the prior art. This applies to reaction conditions, such as temperature, pressure, residence time, concentration of reactants, gas-phase diluents (e. g., nitrogen, methane and CO₂), gas-phase inhibitors (e.g., ethylene chloride and ethylene dichloride), and the like.

The gases fed to the reactor may contain modifiers or inhibitors or additives such as disclosed in U.S. Patents Nos. 2,279,469 and 2,279,470, such as nitrogen oxides and nitrogen oxide-generating compounds.

The terms "gaseous member of a redox-half-reaction pair," "gaseous efficiency-enhancing member of a redox-half-reaction pair," or like terms referred to herein, have a meaning similar to that for the "salt of a member of a redox-half-reaction pair," or like terms, defined above. That is, these terms refer to members of half-reactions, represented in standard or single electrode potential tables in standard reference texts or handbooks which are in a gaseous state and are substances which, in the reaction equations represented in the texts, are either oxidized or reduced. The preferred gaseous efficiencyenhancing materials are compounds containing an element capable of existing in more than two valence states, preferably nitrogen and another element which is, preferably, oxygen. Examples of preferred gaseous efficiency-enhancing members of redox-half-reaction pairs include at least one of NO, NO₂, N₂O₄, N₂O₃ or any gaseous substance capable of forming one of the aforementioned gases, particularly NO and NO₂, under epoxidation conditions, and mixtures thereof with one or more of PH₃, CO, SO₃, SO₂, P₂O₅, and P₂O₃. NO is often preferred as the gaseous efficiency-enhancing compound.

The desirability of recycling unreacted feed, or employing a single-pass system, or using successive reactions to increase conversion by employing reactors in a series arrangement can be readily determined by those skilled in the art. The particular mode of operation selected will usually be dictated by process economics.

Generally, the commercially practiced processes for manufacturing ethylene oxide are carried out by continuously introducing a feed stream containing ethylene and oxygen to a catalyst-containing reactor at a temperature of from 200°C to 300°C, and a pressure which may vary from 506.6 kPa (five atmospheres) to 3039.8 kPa (30 atmospheres) depending upon the mass velocity and productivity desired. Residence times in large-scale reactors are generally on the order of 0.1-5 seconds. Oxygen may be supplied to the reaction in an oxygen-containing stream, such as air or as commercial oxygen. The resulting ethylene oxide is separated and recovered from the reaction products using conventional methods.

As has been indicated, a typical process for the production of alkylene oxides produces significant amounts of carbon dioxide as a by-product. It is desirable to remove this material because concentrations of carbon dioxide much in excess of about 15 mole percent adversely affect the activity of the ethylene oxide catalyst. A preferred procedure for this removal is that described in U.S. Patent No. 3,907,969, referred to above. This process for scrubbing carbon dioxide-containing aqueous streams, and the special chemical streams used for such scrubbing, are well known in the industry and are called the ''Benfield process" and the "Benfield solution," respectively, owned and licensed by UOP, Inc., of Des Plaines, Illinois. Accordingly, the present invention will be described, for convenience, principally with reference to the Benfield solution.

In a typical commercial design, the effluent stream from the carbon dioxide scrubbing column using the Benfield solution as the scrubbing agent goes largely (or completely depending where the removal unit takeoff stream is) to the CO₂ desorber. Economical and environmentally sound utilization of the Benfield process requires recycle of the effluent stream from the carbon dioxide desorbing column back to the carbon dioxide absorbing column. When contaminants build up in the Benfield solution to the point that the system no longer operates efficiently, the solution is taken in whole or in part to the decontamination unit, i.e., the unit which implements the method of this invention, where impurities as described previously are removed. From there, the solution is brought back to the Benfield scrubber and returned to the scrubber recycle stream. The organics present are primarily the acids formic and oxalic. It is important to remove such organics since they form acid salts with potassium and so tie up potassium that otherwise would be present as carbonate and available for removing carbon dioxide.

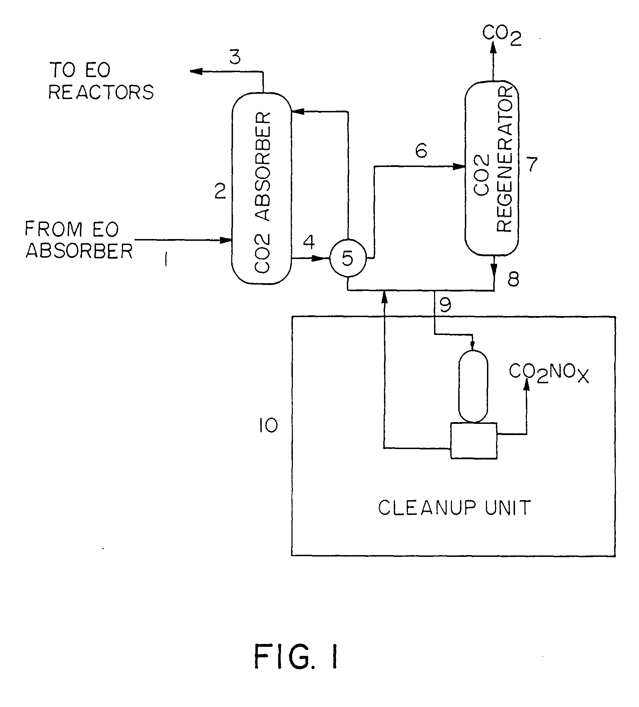

More specifically, referring to Fig. 1, CO₂-bearing gaseous stream 1 is fed to CO₂ absorber column 2 where it is contacted countercurrently with Benfield solution, i.e., an aqueous potassium carbonate/bicarbonate solution promoted with vanadium oxide and boric acid. Overhead stream 3, from which the CO₂ has been removed, is returned to the alkylene oxide manufacturing process. Bottoms stream 4 passes through heat exchanger 5 from which it is sent via stream 6 to a CO₂ regenerating column 7, in which CO₂ is separated and released to the atmosphere. Bottoms stream 8 from column 7 comprises an aqueous potassium carbonate/bicarbonate solution, promoted with vanadium oxide and boric acid, and contaminated with potassium organic acid salts, small amounts of alkylene glycol and, in the practice of certain embodiments of the method of U.S. patent No. 5,504,053, mentioned above, also potassium nitrate/nitrite. Bottoms stream 8 is returned to the system until such time as the build-up of contaminants is found to be interfering with the efficient absorption of CO₂. At that time, slip stream 9 is diverted to contaminant removal (or "clean-up" unit) 10 for the practice of the present method. In general terms, the clean-up unit comprises heating means, separating means, and dissolution means, to perform the steps previously mentioned.

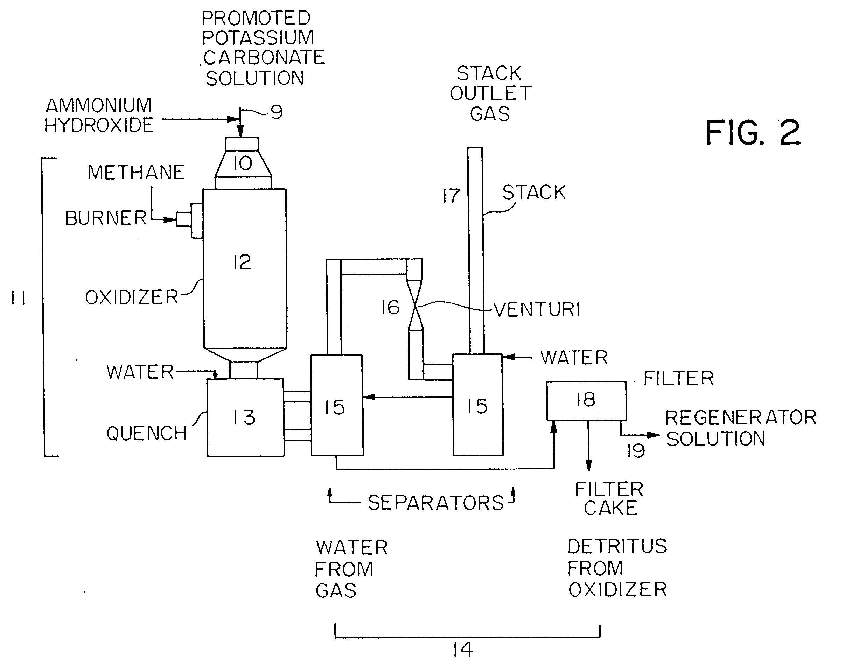

A preferred embodiment of clean-up unit 10 is depicted is Fig. 2, which relates to a T-Thermal SUB-X oxidizer (sold by T-Thermal, Inc., Conshohocken, Pennsylvania) and associated equipment. To describe this device in general terms, the solution to be treated is sprayed into a high-temperature, flame-heated zone, water is evaporated, and the resulting particles of salt are pyrolyzed, all within a few seconds. A quench tank below the oxidizer scrubs the effluent gas to remove particulates, reconstituting the solution, now regenerated. Any molten salts hitting the wall run down with gravity into the quench. After the quench, the gas flows through a Venturi scrubber for final particulates removal and out through a stack. An advantage of the system is that solution is fed and solution is pumped out. No handling of solids nor operation of large pieces of rotating equipment is required. The system offers the added potential advantage that *in situ* NOx reduction may be practiced simply by adding ammonia to the feed; thus, regeneration and NOx reduction are combined in one operation.

Referring to Fig. 2, bottoms stream 9 from Fig. 1 is sprayed into radiant zone 10 of T-Thermal device 11, from which it passes into pyrolysis (oxidation) zone 12 for combustion with an appropriate fuel, such as natural gas. Ammonium hydroxide or ammonia may optionally be introduced into zone 10 to provide ammonia to assist in reduction of any NOₓ present. Introduction of ammonia or ammonium hydroxide is particularly advantageous to increase the decomposition of nitrites. In zone 12, the organic acid salts will be converted to potassium carbonate and carbon dioxide, and glycol will be converted to carbon dioxide. Any potassium nitrite/nitrate will be regenerated to potassium carbonate and a gaseous nitrogen species. If ammonia (or ammonium hydroxide) has been introduced, the nitrogen species will be largely molecular nitrogen. If ammonium hydroxide (or ammonia) has not been introduced, the nitrogen species will be largely nitrogen oxides. The molten salts pyrolysis products run down the surface of oxidation zone 12 and pass into aqueous quench tank 13 where the regenerated salts are dissolved to form a solution which is routed to separation section 14, comprising aqueous scrubbers 15, Venturi scrubber 16, stack 17 to the atmosphere, and optionally filter 18 to remove any residual particulates. Separated gases, i.e., CO₂ and NOx (if produced) will be released through stack 17. Regenerated potassium carbonate solution 19 will be returned to the CO₂ absorption train.

Oxidation zone 12 is lined with refractory brick. It has been found that molten Benfield salts will react with and degrade some types of refractory brick, and will penetrate others. The best choice for refractory brick to resist degradation is believed to be a magnesium oxide brick known as "OXIBAK H," available from Harbison-Walker Refractories, Pittsburgh, PA. However, since there is some penetration of OXIBAK H, it is considered useful to back it with a less penetrable brick such as "Greenal-90" from A. P. Green Industries, Inc. of Mexico, MO) Temperature in the oxidation zone should be kept reasonably constant, e.g., within about ±10° C, to minimize thermal cycling degradation of the refractory bricks.

In a preferred embodiment of the present invention, the method and materials of U.S. Patent No. 5,504,053, mentioned above, are combined with those of the Benfield process. Under these conditions, it has been observed that a build-up of alkali nitrates and nitrites occurs in the Benfield solution, particularly when a nitrogen compound, e.g., an oxide of nitrogen, is used as a promoter for the ethylene oxide catalyst by conversion within the catalyst bed to nitrogen oxides. Such contamination should be removed because the nitrates, nitrites, and their inorganic acids reduce the effectiveness of the Benfield solution for carbon dioxide removal.

The percentage of the nitrogen-containg salts present which is decomposed is not critical; however, in order for the process to be operated under commercially efficient conditions of recycle, it is recommended that at least 50 weight percent of the nitrates and at least 50 weight percent of the nitrites be decomposed before return of the decontaminated recycle stream. It will be understood that the overall objective of the removal of the contaminants is to prevent their uncontrolled build-up in the process streams to concentrations which significantly interfere with the efficiency of the carbon dioxide absorption in the scrubbing column. It is recommended that the concentration of contaminants in continuous circulation be limited to no more than 10%, based on the weight of the solution, preferably no more than 5% nitrates, no more than 10%, preferably no more than 5% nitrites, and no more than 10%, preferably no more than 5% organics.
Accordingly, the size of the stream sent to heat treatment should be determined so as to permit these steady-state concentration limits to be met after return of the decontaminated stream to the process.

Surprisingly, the decomposition temperatures of alkali metal nitrites and nitrates is not well known. For example, decomposition temperatures ranging from 400 to 1,000° C have been reported for sodium and potassium nitrate (see C.M. Kramer, "Intrinsic Decomposition of Sodium Nitrate and Potassium Nitrate," Thesis, University of California, Davis, December 1980). While the operating temperature of the heating means is not narrowly critical, it has been found that for the streams being treated in the present invention, the heating means should be operated so as to subject the dry solids and organics to a temperature of at least 300° C, and preferably at least 350° C. Below about 300° C the removal of contaminants begins to take an unacceptably long time. Upper temperature is determined primarily by equipment limitations and expense rather than reaction rates or products. An upper temperature due to equipment limitations might be in the range of 1700°C. Preferred temperature is in the range of 350 to 1400° C.

In addition to the other inorganic salts, the stream will also contain a substantial concentration of carbonates, e.g., alkali carbonates, resulting from the reaction of the carbon dioxide with the Benfield solution. It is not critical to the method of this invention whether or not such carbonates are decomposed. If they are decomposed, they go to hydroxides or oxides, which are effective in CO₂ removal. If they are not decomposed, they stay as carbonates which also are effective in CO₂ removal.

While the preferred thermal treatment device is the T-Thermal oxidizer described above, the heating means can be any suitable device for applying the necessary heat while maintaining the materials in handleable condition. For example, an oven or series of ovens could be employed, if appropriately designed to avoid melting of the salts. By way of guidance but not limitation, it has been found that simple pyrolysis in air at about 600° C will remove essentially all nitrites and organics, but will provide little or no significant removal of nitrates. There may also be conversion of some nitrites to nitrates. The nitrates can be removed by treatment at 750° C or more; however, there is the likelihood of producing molten products which could be difficult to handle in an industrial facility.

A useful alternative to simple pyrolysis is the use of spray drying. Any of the numerous available spray drying devices should be satisfactory to take the contaminated Benfield solution to substantially dry powder. The powder can then be recovered and subjected to pyrolysis, as described above. Other alternative means of heat treatment include rotary calcination, band calcination and microwave treatment. Such methods, however, have the disadvantage of requiring either handling of solids, operation of large pieces of rotating equipment, or both. Care should also be taken to make sure the resulting solids are substantially dry, to avoid sticking or damming on the hot surfaces of the equipment. By "substantially dry" is meant the essential absence of a liquid phase.

It is considered to be desirable to conduct the heating in an inert, oxygen-lean atmosphere. Use of an inert atmosphere appears to reduce somewhat the temperatures needed to achieve decomposition. While any inert gas should be useful, the preferred gases are nitrogen and carbon dioxide. Complete absence of oxygen may, however, result in charring of organics; accordingly, an oxygen-lean environment is preferred to an oxygen-free one. The oxygen concentration should be maintained at a level of at least 1% by volume to facilitate the decomposition of organics, and preferably in the range of 3% to 5%. Under these conditions, temperatures in the range of 500-600° C should be satisfactory to accomplish the decomposition of the nitrogen-bearing salts and the organics.

### Examples

### Example 1

Into a 1.2 m (four-foot) diameter by 2.4 m (eight-foot) high refractory-lined chamber maintained at a temperature of 1027°C (1880° F), an oxygen level of 5.0 vol. %, and a pressure of 0.035 MPa gauge (5 psig) with an internal gas-fired burner, was atomized at a rate of 41 kg (90 pounds) per hour an aqueous solution comprising a solution of potassium carbonate and potassium bicarbonate in water with proprietary promoters used for removal of carbon dioxide from an ethylene oxide process, 90 wt. %, ethylene glycol, 5 wt. %, potassium nitrate, 4.5 wt. %, and potassium nitrite, 0.5 wt. %. In use, the potassium carbonate/potassium bicarbonate solution had built up organic acid salts to an extent such that the feed solution contained about 10,500 parts per million by weight of formate ion and about 5,000 parts per million by weight of oxalate ion. From the chamber downstream of the injection point was pulled a sample of vapor and atomized salts, the salts having been in the heated chamber for a period of about 3.5 seconds. The salts were recovered by scrubbing in water, then the water was analyzed for nitrate, nitrite, formate, oxalate and potassium carbonate. Table 1 shows the results of analyses of the feed and of the water used to scrub the sample of vapor and salts. Adjusting the scrubber solution concentrations to the same carbonate level as the feed shows that formate and oxalate were completely decomposed, nitrate was 98+% decomposed, and nitrite was 42% decomposed. Nitrogen oxides were detected in the gaseous effluent from the unit in amount corresponding to 0.64 mole of nitrogen oxides per 1.00 mole of nitrite plus nitrate fed.

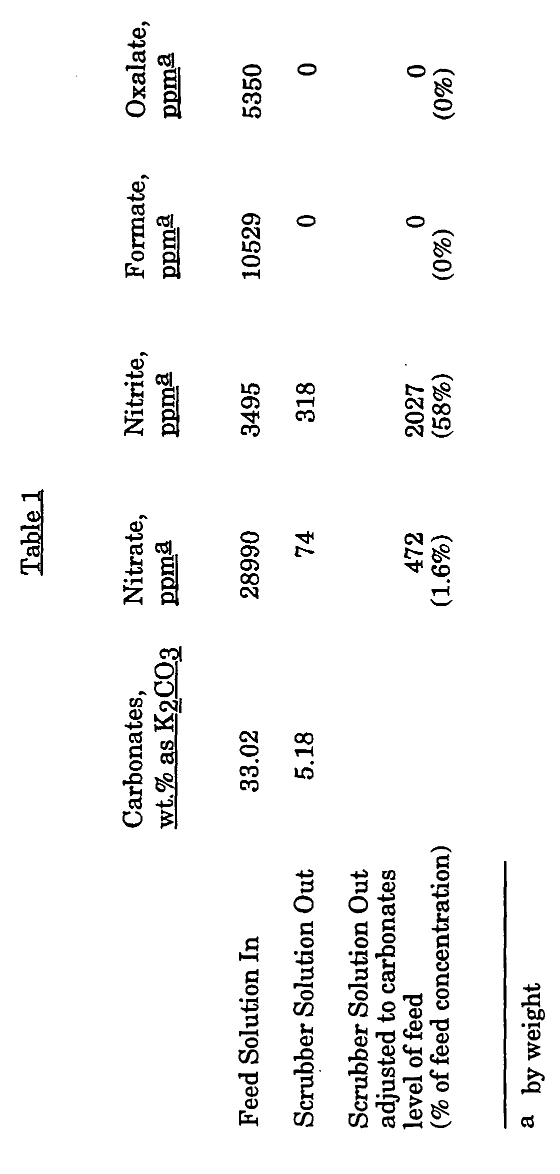

### Example 2

This example shows the effect of ammonium hydroxide.

Into the chamber of Example 1 maintained at a temperature of 1027°C (1880° F), an excess oxygen amount of 2.0 vol. %, and a pressure of 0.035 MPa gauge (5 psig), was atomized the solution fed in Example 1, 60 kg (132 pounds) per hour, mixed with 25 wt. % aqueous ammonium hydroxide, 8.3 kg (18.3 pounds) per hour. The amount of ammonium hydroxide corresponded to 2.8 moles of ammonium hydroxide per 1.0 mole of nitrite plus nitrate. From the chamber downstream of the injection point was taken a sample of vapor and atomized salts, the salts having been in the heated chamber for a period of about 2.4 seconds. The salts were isolated by scrubbing in water, then the water was analyzed for nitrate, nitrite, formate, oxalate and potassium carbonate. Table 2 shows the results of analyses of the feed prior to mixing with ammonium hydroxide and of the water used to scrub the sample of vapor and salts. Adjusting the scrubber solution concentrations to the same carbonate level as the feed prior to mixing with ammonium hydroxide shows that formate and oxalate were completely decomposed, nitrate was 99+% decomposed, and nitrite was 95+% decomposed. Nitrogen oxides were detected in the gaseous effluent from the unit in amount corresponding to 0.16 mole of nitrogen oxides per 1.00 mole of nitrite plus nitrate fed. Under the same conditions without ammonium hydroxide, nitrogen oxides were detected in the effluent in amount of 0.66 mole of nitrogen oxides per 1.00 mole of nitrite plus nitrate fed. Thus nitrogen oxides were reduced by 76% when ammonium hydroxide was fed. Also, the conversion of nitrite was increased from 42% (Example 1) to 95+% when ammonium hydroxide was fed.

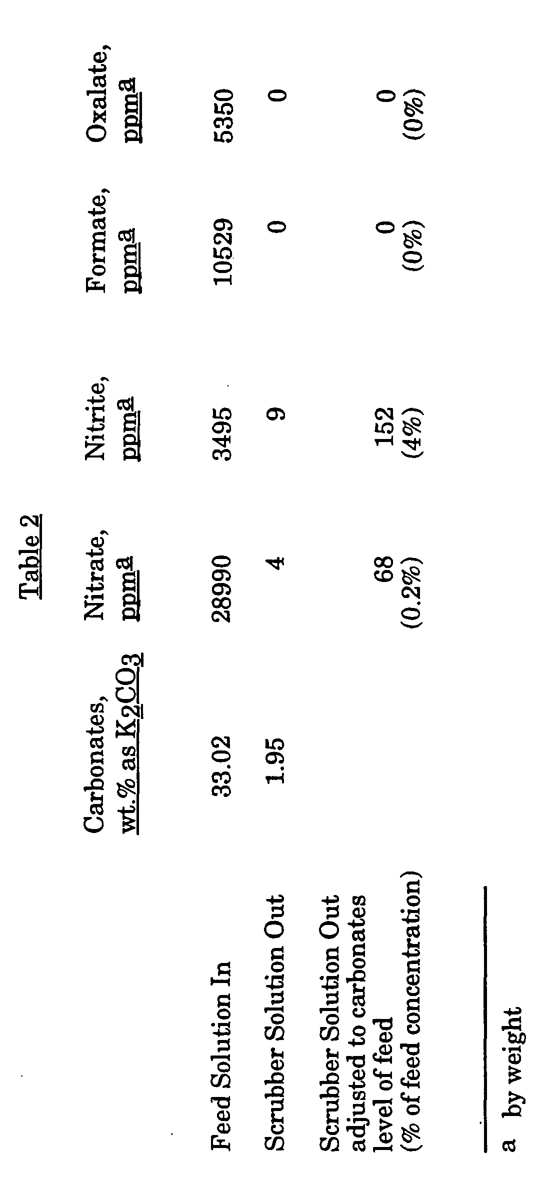

### Example 3

This example shows the effect of a lower amount of ammonium hydroxide and higher temperature.

Into the chamber of Example 1 maintained at a temperature of 1093°C (2000° F), an excess oxygen level of 1.2 vol. %, and a pressure of 0.035 MPa gauge (5 psig), was sprayed the solution fed in Example 1, 41 kg (90 pounds) per hour, mixed with 25 wt. % aqueous ammonium hydroxide, 3.9 kg (8.5 pounds) per hour.
The amount of ammonium hydroxide corresponded to 1.6 moles of ammonium hydroxide per 1.0 mole of nitrite plus nitrate. From the chamber downstream of the injection point was taken a sample of vapor and atomized salts, the salts having been in the heated chamber for a period of about 2.4 seconds. The salts were isolated by scrubbing in water, then the water was analyzed for nitrate, nitrite, formate, oxalate and potassium carbonate. Table 3 shows the results of analysis of the feed prior to mixing with ammonium hydroxide and of the water used to scrub the sample of vapor and salts. Adjusting the scrubber solution concentrations to the same carbonate level as the feed prior to mixing with ammonium hydroxide shows that formate and oxalate were completely decomposed, nitrate was 99+% decomposed, and nitrite was 90% decomposed. Nitrogen oxides were detected in the gaseous effluent from the unit in amount corresponding to 0.55 mole of nitrogen oxides per 1.00 mole of nitrite plus nitrate fed. Under the same conditions without ammonium hydroxide added to the feed, nitrogen oxides were detected in the effluent in amount of 0.78 mole of nitrogen oxides per 1.00 mole of nitrite plus nitrate fed. Thus, nitrogen oxides were reduced by 29% when ammonium hydroxide was fed at the level indicated.

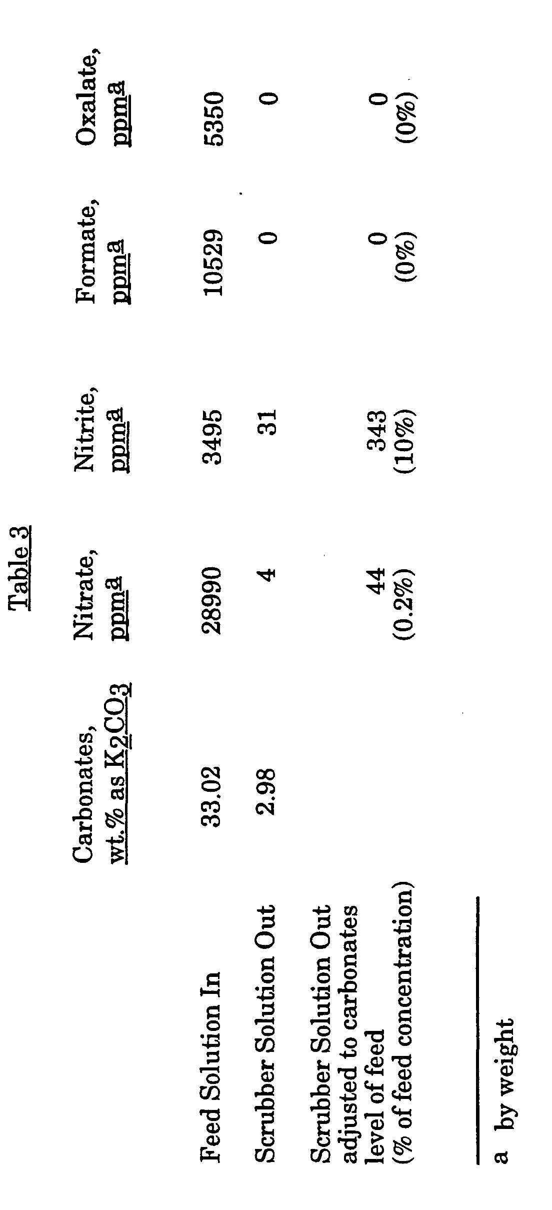

### Example 4

This example shows the effect of ammonia and higher pressure.

Into the chamber of Example 1 maintained at a temperature of 1054°C (1930° F), an excess oxygen amount of 1.2 vol. %, and a pressure of 0.077 MPa gauge (11 psig), was sprayed the solution fed in Example 1, 41 kg (90 pounds) per hour, mixed with 100 wt. % ammonia, 0.53 kg (1.16 pounds) per hour. The amount of ammonia corresponded to 1.7 moles of ammonium hydroxide per 1.0 mole of nitrite plus nitrate. From the chamber downstream of the injection point was taken a sample of vapor and atomized salts, the salts having been in the heated chamber for a period of about 3.5 seconds. The salts were isolated by scrubbing in water, then the water was analyzed for nitrate, nitrite, formate, oxalate and potassium carbonate. Table 4 shows the results of analysis of the feed prior to mixing with ammonia and of the water used to scrub the sample of vapor and salts. Adjusting the scrubber solution concentrations to the same carbonate level as the feed prior to mixing with ammonium hydroxide shows that formate and oxalate were completely decomposed, nitrate was 99+% decomposed, and nitrite was 90% decomposed. Nitrogen oxides were detected in the gaseous effluent from the unit in amount corresponding to 0.24 mole of nitrogen oxides per 1.00 mole of nitrite plus nitrate fed. Under the same conditions without ammonia added to the feed, nitrogen oxides were detected in the effluent in amount of 0.86 mole of nitrogen oxides per 1.00 mole of nitrite plus nitrate fed. Thus, nitrogen oxides were reduced by 72% when ammonia was fed.

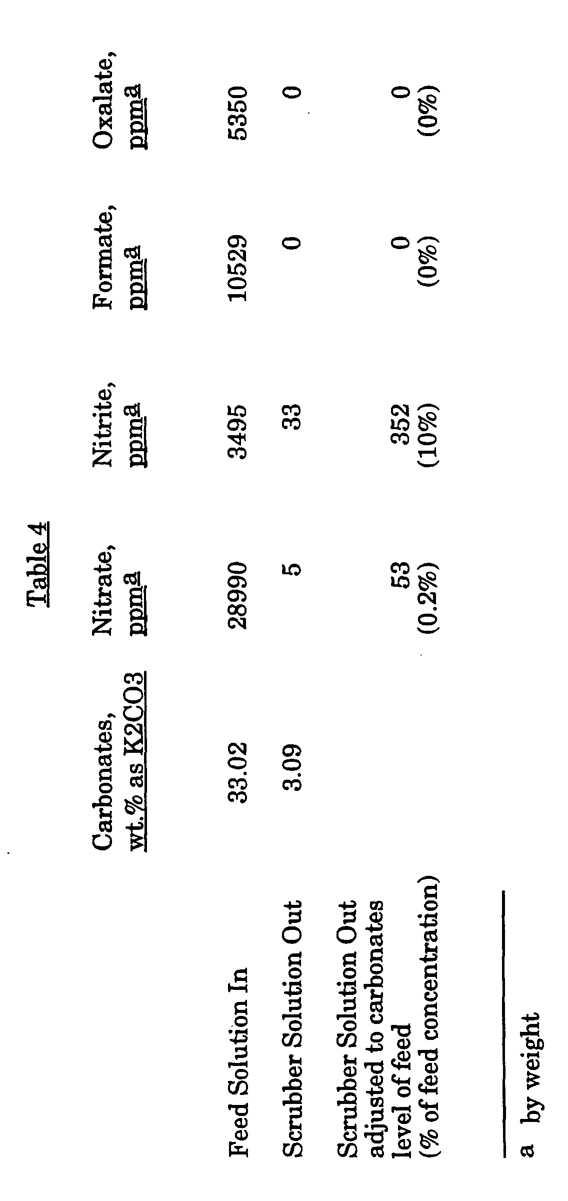

### Example 5

Into a 165.1 mm (6.5-inch) diameter by 292.1 mm (11.5-foot) long rotary calciner heated at 620°C were fed over 52 minutes approximately 6 kg (13 pounds) of dried salts from Benfield solution. The salts contained 3.10 wt. % nitrate ion, 3.35 wt. % nitrite ion, 1.94 wt. % oxalate ion, and 5.15 wt. % carbonate ion. Salt residence time within the calciner was approximately one-half hour. Nitrogen at 0.08m³ (3 cu. ft.) per min. was fed countercurrently relative to salts through the calciner. The oxygen level in the gas exiting the calciner was 9 volume percent. Calcined product, 3.7 kg (8.1 pounds), was obtained, which contained from grab sample analysis 0.12 wt. % nitrite ion, 1.57 wt. % nitrate ion, 0.00% oxalate ion, and 0.00 wt. % formate ion. Nitrite decomposition was 96%, nitrate decomposition was 53%, oxalate and formate decompositions were 100%.

## Claims

1. A method for controlling in a process for the production of alkylene oxide the build-up of nitrogen-containing salts contained in an aqueous process stream recycling between a CO₂ absorption step and a CO₂ desorption step, comprising:
(a) directing at least some of said aqueous process stream through a heating means under conditions sufficient to decompose at least part of said nitrogen-containing salts,
(b) directing the effluent from the heating means to at least one removal means for removing at least part of the decomposition products of the nitrogen-containing salts,
(c) dissolving in water at least part of said effluent after said removal of decomposition products, and
(d) returning said nitrogen reduced effluent to said aqueous process stream.

2. A process for the manufacture of alkylene oxide comprising the oxidation of an alkylene, said process further comprising an aqueous recycle stream containing dissolved alkali metal carbonate and/or bicarbonate salts from a CO₂ absorption step to a CO₂ desorption step and return, said stream further containing organic materials and nitrogen-containing salts as contaminants, comprising controlling the build-up of said contaminants in said recycle stream by:
(a) directing at least some of said recycle stream through a heating means under conditions sufficient to decompose at least part of the organic materials and at least part of the nitrogen-containing salts.
(b) removing gaseous products of the decomposition,
(c) dissolving remaining salts in water to form an aqueous solution, and
(d) returning said aqueous solution to the aqueous recycle stream containing alkali metal carbonate/bicarbonate salts.

3. The process of claim 2 further comprising:
firstly directing at least some of said recycle stream through a heating means under conditions sufficient to take the salts to substantial dryness, and then subjecting the dried salts and organics to the steps of claim 2.

4. A process of claim 2 or 3 wherein the heating is done in an oxygen-lean atmosphere.

5. A process of any one of claims 2 to 4 in which step (a) further comprises introducing ammonia or ammonium hydroxide into the heating means.

## Patentansprüche

1. Verfahren zur Steuerung der Anreicherung von Stickstoff enthaltenden Salzen, die in einem wäßrigen Prozeß-Kreislaufstrom zwischen einem CO₂-Absorptionsschritt und einem CO₂-Desorptionsschritt enthalten sind, in einem Verfahren zur Herstellung von Alkylenoxid, umfassend:
(a) Leiten mindestens eines Teils des wäßrigen Prozeßstroms durch eine Heizeinrichtung unter Bedingungen, die ausreichen, zumindest einen Teil der Stickstoff enthaltenden Salze zu zersetzen,
(b) Leiten des Abstroms aus der Heizeinrichtung zu mindestens einer Abtrenneinrichtung zum Entfernen zumindest eines Teils der Zersetzungsprodukte der Stickstoff enthaltenden Salze,
(c) Lösen in Wasser von mindestens einem Teil des Abstroms nach dem Entfernen der Zersetzungsprodukte und
(d) Rückführen des Stickstoff-reduzierten Abstroms in den wäßrigen Prozeßstrom.

2. Verfahren zur Herstellung von Alkylenoxid, umfassend die Oxidation eines Alkylens, wobei das Verfahren ferner umfaßt einen wäßrigen Kreisstrom, enthaltend gelöste Alkalimetallcarbonat- und/oder -bicarbonatsalze, von einem CO₂-Absorptionsschritt zu einem CO₂-Desorptionsschritt und zurück, wobei der Strom ferner organische Substanzen und Stickstoff enthaltende Salze als Verunreinigungen enthält, umfassend die Steuerung der Anreicherung der Verunreinigungen im Kreisstrom durch:
(a) Leiten mindestens eines Teils des Kreisstroms durch eine Heizeinrichtung unter Bedingungen, die ausreichen, zumindest einen Teil der organischen Substanzen und zumindest einen Teil der Stickstoff enthaltenden Salze zu zersetzen,
(b) Entfernen von gasförmigen Produkten der Zersetzung,
(c) Lösen der verbleibenden Salze in Wasser, um eine wäßrige Lösung zu bilden, und
(d) Rückführen der wäßrigen Lösung zum wäßrigen Kreisstrom, der Alkalimetallcarbonat/bicarbonat-Salze enthält.

3. Verfahren nach Anspruch 2, das ferner umfaßt, zunächst mindestens einen Teil des Kreisstroms durch eine Heizeinrichtung zu leiten unter Bedingungen, die ausreichen, die Salze im wesentlichen zur Trockne zu überführen, und die getrockneten Salze und die organischen Substanzen dann den Schritten von Anspruch 2 zu unterwerfen.

4. Verfahren nach Anspruch 2 oder 3, in welchem die Erwärmung in einer sauerstoffarmen Atmosphäre ausgeführt wird.

5. Verfahren nach irgendeinem der Ansprüche 2 bis 4, in welchem Schritt (a) ferner das Einleiten von Ammoniak oder Ammoniumhydroxid in die Heizeinrichtung umfaßt.

## Revendications

1. Procédé pour maîtriser, dans un procédé de production d'oxyde d'alkylène, l'accumulation de sels azotés contenus dans un flux aqueux de procédé de recyclage entre une étape d'absorption de CO₂ et une étape de désorption de CO₂, comprenant les étapes consistant à :
(a) diriger au moins une partie dudit flux aqueux de procédé à travers un moyen de chauffage dans des conditions suffisantes pour décomposer au moins une partie desdits sels azotés,
(b) diriger l'effluent provenant du moyen de chauffage vers au moins un moyen de séparation pour séparer au moins une partie des produits de décomposition des sels azotés,
(c) dissoudre au moins une partie dudit effluent dans de l'eau après ladite séparation des produits de décomposition, et
(d) ramener ledit effluent à teneur réduite en azote dans ledit flux aqueux de procédé.

2. Procédé de fabrication d'oxyde d'alkylène, comprenant l'oxydation d'un alkylène, ledit procédé comprenant, en outre, un flux aqueux de recyclage contenant des sels carbonates et/ou bicarbonates de métal alcalin dissous d'une étape d'absorption de CO₂ à une étape de désorption de CO₂ et le retour, ledit flux contenant, en outre, des matières organiques et des sels azotés en tant que contaminants, comprenant la maîtrise de l'accumulation desdits contaminants dans ledit flux de recyclage au moyen des étapes consistant à :
(a) diriger au moins une partie dudit flux de recyclage à travers un moyen de chauffage dans des conditions suffisantes pour décomposer au moins une partie des matières organiques et au moins une partie des sels azotés,
(b) séparer les produits gazeux de la décomposition,
(c) dissoudre les sels restants dans de l'eau pour former une solution aqueuse, et
(d) ramener ladite solution aqueuse dans le flux aqueux de recyclage contenant des sels carbonates et/ou bicarbonates de métal alcalin.

3. Procédé selon la revendication 2, comprenant, en outre, les étapes consistant d'abord à diriger au moins une partie du flux de recyclage à travers un moyen de chauffage dans des conditions suffisantes pour amener les sels jusqu'à une siccité substantielle, et ensuite à soumettre les sels séchés et les matières organiques aux étapes selon la revendication 2.

4. Procédé selon la revendication 2 ou 3, dans lequel on effectue le chauffage dans une atmosphère à faible teneur en oxygène.

5. Procédé selon l'une quelconque des revendications 2 à 4, dans lequel l'étape (a) comprend, en outre, l'introduction d'ammoniac ou d'hydroxyde d'ammonium dans le moyen de chauffage.
